# EUROPÄISCHE PATENTANMELDUNG

(11) **EP 2 492 495 A2**
(43) Veröffentlichungstag der Anmeldung: **29.08.2012**
(21) Anmeldenummer: 12001209.1
(22) Anmeldetag: 23.02.2012
(51) Int. Cl.: F03B 3/12

(54) **Vorrichtung zur Energieumwandlung**

(30) Priorität: 23.02.2011 DE 102011012168; 23.02.2011 DE 102011012188; 23.02.2011 DE 102011012189; 13.07.2011 DE 102011007673
(71) Anmelder: Zimmerly, Walter, 86169 Augsburg (DE)
(72) Erfinder: Zimmerly, Walter, 86169 Augsburg (DE)
(74) Vertreter: Mederle-Hoffmeister, Stefan

(57) **Zusammenfassung**

Vorrichtung zur Energierückgewinnung aus einem strömenden Medium, insbesondere einem Fluid oder einem granularen Medium, oder einem mit kinetischer Energie beaufschlagten Festkörper, wobei die Vorrichtung zur Energierückgewinnung eine Vorrichtung (10, 10', 10") zur Umwandlung von Strömungsenergie oder kinetischer Energie eines Fluids, eines granularen Mediums oder eines Festkörpers in kinetische Energie, insbesondere Rotationsenergie, eines festen Körpers aufweist.

## Beschreibung

Die vorliegende Erfindung betrifft eine Vorrichtung zur Energierückgewinnung aus einem strömenden Medium, insbesondere einem Fluid oder einem granularen Medium, oder einem mit kinetischer Energie beaufschlagten Festkörper gemäß dem Oberbegriff des Patentanspruchs 1.

Vorrichtungen zur Energierückgewinnung aus einem strömenden Medium, insbesondere einem Fluid oder einem granularen Medium, oder einem mit kinetischer Energie beaufschlagten Festkörper sind beispielsweise aus der Heizungs- oder Lüftungstechnik bekannt.

In derartigen Anlagen wird im Allgemeinen die in einem Abgas oder einer Abluft enthaltene Wärmeenergie über Wärmetauscher dem Abgas oder der Abluft entzogen und dann einer weiteren Verwendung, beispielsweise der Erwärmung einer Raumluft zugeführt.

Eine Konstruktion mit Wärmetauschern ist jedoch relativ komplex. Ferner ist es mit einer derartigen Konstruktion nur möglich, dem abzuführenden Abgas oder der abzuführenden Luft Wärmeenergie zu entziehen, was zu einem begrenzten Wirkungsgrad führt. Der Einsatz solcher Anlagen ist ferner im Allgemeinen auf eine Energierückgewinnung in Gasen beschränkt.

Demnach ist es Aufgabe der vorliegenden Erfindung, eine Vorrichtung zur Verfügung zu stellen, die einen Wirkungsgrad einer Energierückgewinnungsvorrichtung erhöhen kann und dabei konstruktiv möglichst einfach aufgebaut ist. Ferner soll diese Vorrichtung nicht nur für Gase, sondern auch für Fluide, granulare Medien und auch für Festkörper geeignet sein.

Diese Aufgabe wird erfindungsgemäß durch eine Vorrichtung gemäß dem Patentanspruch 1 gelöst. Die erfindungsgemäße Vorrichtung zur Energierückgewinnung aus einem strömenden Medium, insbesondere einem Fluid oder einem granularen Medium, oder einem mit kinetischer Energie beaufschlagten Festkörper weist dazu eine Vorrichtung zur Umwandlung von Strömungsenergie oder kinetischer Energie eines Fluids, eines granularen Mediums oder eines Festkörpers in kinetische Energie, insbesondere Rotationsenergie, eines festen Körpers auf. Durch die Ausnutzung der Strömungsenergie bzw. der kinetischen Energie des Mediums, welchem Energie entzogen werden soll, ist der Einsatzbereich einer derartigen Vorrichtung im Gegensatz zu Vorrichtungen mit Wärmetauschern deutlich erweitert. Es ist auch eine Verwendung einer erfindungsgemäßen Vorrichtung in Kombination mit Wärmetauschern möglich, d.h. es können auch ein oder mehrere Wärmetauscher in der erfindungsgemäßen Vorrichtung angeordnet werden, um den Wirkungsgrad der Vorrichtung weiter zu verbessern.

Weitere Merkmale der Erfindung sind in den Unteransprüchen angegeben.

Die Erfindung wird im Folgenden mit Bezug auf die beiliegenden Zeichnungen anhand von bevorzugten Ausführungsformen beispielhaft beschrieben. In den Zeichnungen zeigen
Fig. 1 eine erste Ausführungsform einer erfindungsgemäßen Vorrichtung in einer schematischen Querschnittsdarstellung;
Fig. 2 eine zweite Ausführungsform in einer modellhaften fotografischen Darstellung in Seitenansicht;
Fig. 3 eine dritte Ausführungsform einer erfindungsgemäßen Vorrichtung in einer schematischen Querschnittsdarstellung;
Fig. 4 eine vierte mögliche Ausführungsform einer erfindungsgemäßen Vorrichtung in Draufsicht;
Fig. 5 die vierte Ausführungsform in Seitenansicht;
Fig. 6 eine fünfte mögliche Ausführungsform einer erfindungsgemäßen Vorrichtung in Draufsicht;
Fig. 7 eine perspektivische Ansicht einer sechsten möglichen Ausführungsform einer erfindungsgemäßen Vorrichtung; und
Fig. 8 die Ausführungsform gemäß Fig. 7 in einer weiteren perspektivischen Darstellung.

Erfindungsgemäß weist eine Vorrichtung zur Energierückgewinnung aus einem strömenden Medium, insbesondere einem Fluid oder einem granularen Medium, oder einem mit kinetischer Energie beaufschlagten Festkörper eine Vorrichtung zur Umwandlung von Strömungsenergie oder kinetischer Energie eines Fluids, eines granularen Mediums oder eines Festkörpers in kinetische Energie, insbesondere Rotationsenergie, eines festen Körpers auf. Eine erfindungsgemäße Vorrichtung basiert demnach darauf, dem Medium, dessen Energie zurückgewonnen werden soll, kinetische Energie bzw. Strömungsenergie zu entziehen.

Eine solche Vorrichtung kann, wie bereits vorstehend erläutert, auch Komponenten aufweisen, die dem Medium andere Energieformen (beispielsweise Wärmeenergie) entziehen, in der Folge sei aber zur Vereinfachung davon ausgegangen, dass die Vorrichtung nur eine Vorrichtung zur Umwandlung von Strömungsenergie oder kinetischer Energie eines Fluids, eines granularen Mediums oder eines Festkörpers in kinetische Energie, insbesondere Rotationsenergie, eines festen Körpers aufweist.

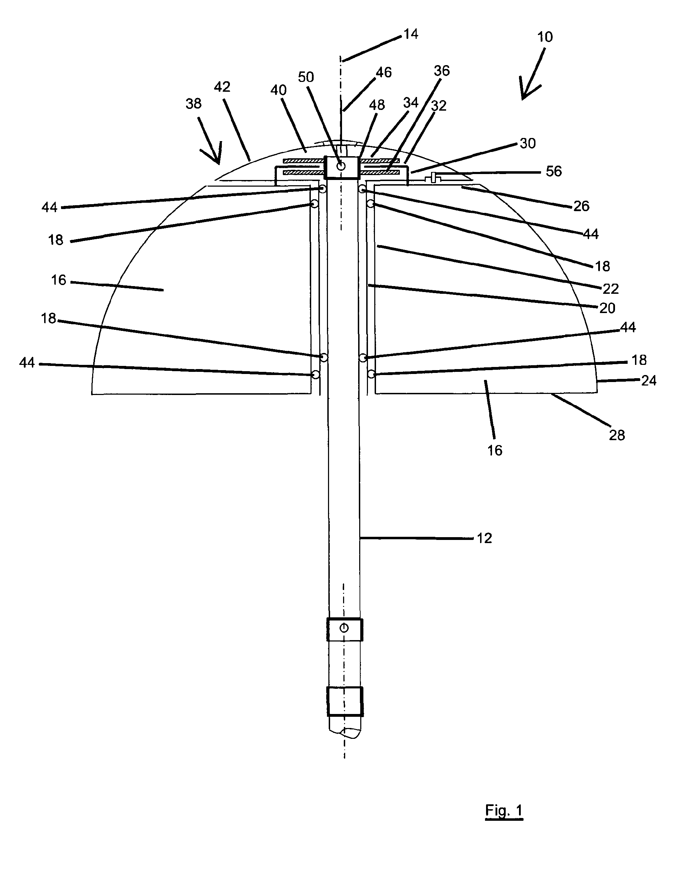

Die in Fig. 1 dargestellte erste Ausführungsform einer erfindungsgemäßen Vorrichtung 10 weist eine Halte- bzw. Befestigungsvorrichtung in Form eines Trägers 12 auf, mittels welchem die Vorrichtung 10 beispielsweise in einem Rohr oder einem Kamin oder einem anderen von einem Medium durchströmten Volumen verankerbar bzw. befestigbar ist. Die Anordnung der Anlage kann derart erfolgen, dass eine Mittelachse 14 der Vorrichtung 10 sich senkrecht, waagrecht oder unter einem beliebigen Winkel zur Senkrechten oder Waagrechten erstreckt. Die Anordnung erfolgt vorzugsweise unter Berücksichtigung der Strömungsgegebenheiten des Aufstellorts.

Die Vorrichtung 10 weist weiterhin Wirkelemente in Form von Drehflügeln 16 auf, welche dem strömenden Fluid oder dem granularen Medium oder dem mit kinetischer Energie beaufschlagten Festkörper ausgesetzt oder aussetzbar sind, und durch dieses oder diesen in eine Drehbewegung versetzbar angeordnet sind. Dazu sind die Drehflügel 16 mittels Lagervorrichtungen, welche in der beschriebenen Ausführungsform als Kugellager 18 ausgebildet sind, an einem zylinderförmig ausgebildeten Wirkelementeträger 20 drehbar und sich von diesem wegerstreckend angeordnet. In einer alternativen Ausführungsform können die Drehflügel 16 derart am Wirkelementeträger 20 angeordnet sein, dass sie nur in eine (bevorzugte) Richtung drehbar sind, in der vorliegend beschriebenen ersten Ausführungsform sind sie jedoch in beide Richtungen drehbar angeordnet. Der Wirkelementeträger 20 kann auch nicht-zylindrisch, d.h. nicht mit einem kreisförmigen Querschnitt, sondern beispielsweise mit einem viereckigen, dreieckigen, oder elleipsenförmigen Querschnitt ausgestaltet sein. Der Wirkelementeträger 20 ist konzentrisch um die Mittelachse 14 der Vorrichtung 10 angeordnet. Die Wirkelemente in Form der Drehflügel 16 sind damit drehbar um die Mittelachse 14 angeordnet. Bei der Mittelachse 14 handelt es sich in der Regel (bei einer herkömmlichen, senkrechten Aufstellungsart der Anlage) um die vertikale Mittelachse der Vorrichtung, welche sich in einer axialen Richtung der Vorrichtung 10 erstreckt. In anderen Worten gesagt, sind die Drehflügel 16 um die axiale (Mittel-)Achse der Vorrichtung drehbar angeordnet.

Die Drehflügel 16 weisen auf einer dem Wirkelementeträger 20 und damit der Mittelachse 14 zugeordneten Seite 22 einen geraden Außenumfang auf, während sie auf ihrer dem Wirkelementeträger 20 abgewandten Seite 24 einen bogenförmigen bzw. gebogenen Außenumfang aufweisen. In der vorliegend beschriebenen ersten Ausführungsform sind die Drehflügel 16 auf ihrer dem Wirkelementeträger 20 abgewandten Seite 24 kreisförmig bzw. kreisbogenförmig ausgebildet (weisen einen kreisförmigen bzw. kreisbogenförmigen Außenumfang auf), während in alternativen Ausführungsformen auch ein ellipsenförmig gebogener oder ein anderweitig gebogener Außenumfang denkbar ist. Die Form des Außenumfangs, die zu wählen ist, ist unter anderem von den externen Bedingungen abhängig, unter denen die Vorrichtung 10 zum Einsatz gelangt. Aus theoretischer Sichtweise bietet eine kreisförmige Ausgestaltung des Außenumfangs der Drehflügel 16 bei einer sich direkt und gerade von dem Wirkelementeträger 20 bzw. der Mittelachse 14 wegerstreckenden Anordnung der Drehflügel 16 den Vorteil, dass diese dadurch ein wenigstens teilweise kugelförmiges Wirkvolumen definieren bzw. aufspannen , wobei die Kugelform bei einer kleinstmöglichen Oberfläche ein größtmögliches Volumen und somit auch Wirkvolumen aufweist. Die beiden Seiten 26, 28 der Drehflügel 16, die die dem Wirkelementeträger 20 zugeordnete Seite 22 der Drehflügel 16 mit der dem Wirkelementeträger 20 abgewandten Seite 24 der Drehflügel 16 verbinden, weisen in der vorliegenden Ausführungsform einen geraden Außenumfang auf.

Die Drehflügel 16 stehen über ein Verbindungsbauteil 30 mit einem Rotor 32 eines elektrischen Generators in Verbindung. Der Rotor 32 ist zwischen zwei Statoren 34, 36 angeordnet und bildet mit diesen zusammen den Generator. In der beschriebenen Ausführungsform sind sowohl der Rotor 32 als auch die beiden Statoren 34, 36 scheibenförmig ausgebildet und bilden demnach einen Scheibengenerator. Alternativ hierzu sind selbstverständlich auch andere Generator-Bauformen denkbar. Weiterhin kann in alternativen Ausführungsformen eine Konstruktion implementiert sein, bei welcher die Drehflügel 16 mit einer Vorrichtung zur Übertragung der Drehbewegung, beispielsweise einer Welle in Verbindung bzw. in Wirkeingriff stehen, wodurch eine Übertragung der Drehbewegung (mechanische Arbeit) zu einem Abnehmer (beispielsweise Pumpe oder Antriebsvorrichtung für eine beliebige Maschine) oder beispielsweise zu einem Getriebe zur Erhöhung oder Verringerung der Drehzahl ermöglicht wird.

Zum Schutz des Generators weist die Vorrichtung 10 weiterhin ein durch eine abnehmbare Einhausung begrenztes Volumen 40 auf, in welchem dieser oder in alternativen Ausführungsformen Teile von diesem oder Komponenten zur Aufnahme oder zur Übertragung der Drehbewegung angeordnet sind. Die Einhausung 38 weist einen Abschnitt 42 mit einem bogenförmigen Außenumfang auf, welcher mit den Wirkelementen eine ununterbrochene Außenumfangslinie bildet.

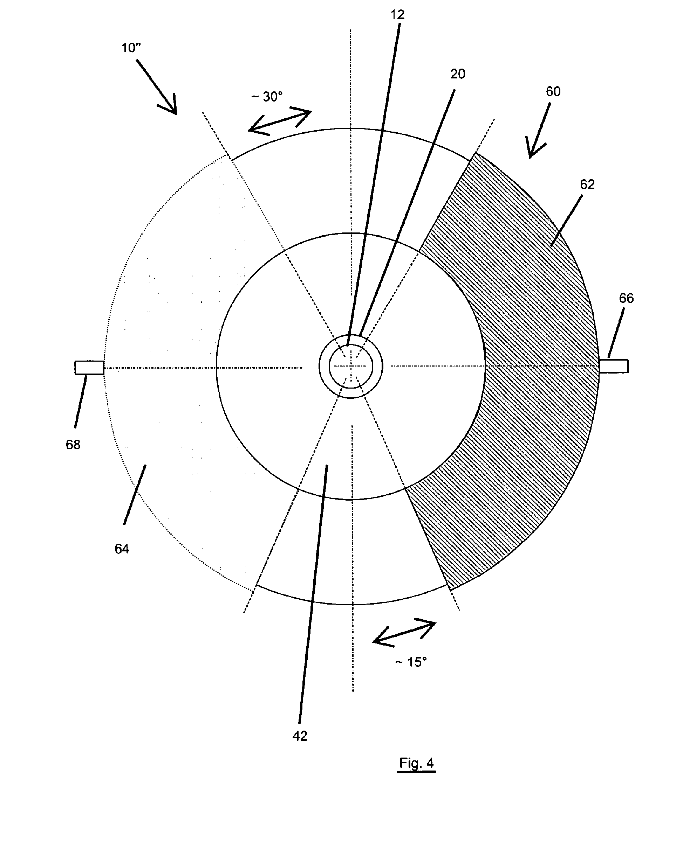

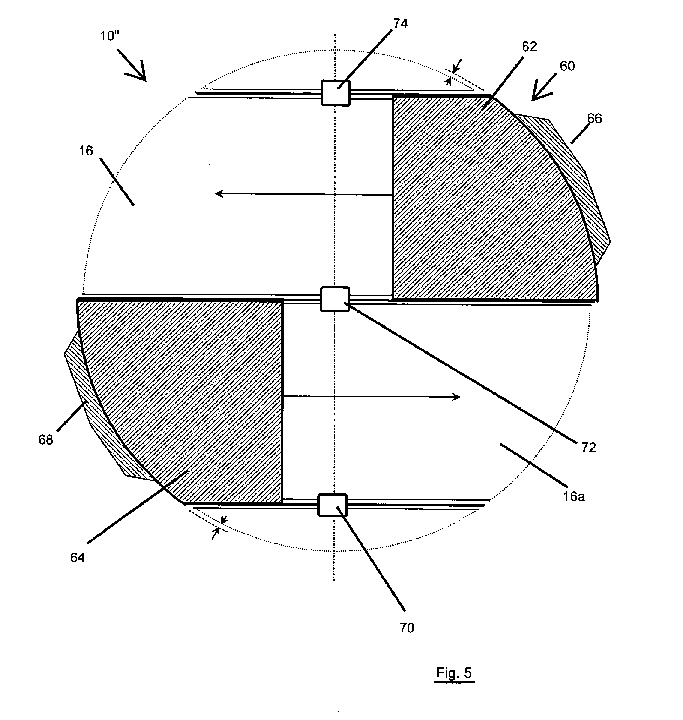

Der Wirkelementeträger 20 ist an dem Träger 12 mittels Lagervorrichtungen in Form von Kugellagern 44 drehbar um die Mittelachse 14 der Vorrichtung 10 gelagert, was in der ersten Ausführungsform optional erfolgt, jedoch für die Konstruktion gemäß der vierten Ausführungsform, welche in den Figuren 4 und 5 dargestellt ist, notwendig ist.

Für eine sichere Befestigung der Vorrichtung 10 ist als Fortsatz des Trägers 12 auf einer Seite der Vorrichtung (als Verlängerung des Trägers 12, welche über die Vorrichtung hinaussteht) ein Bolzen 46 angeordnet, welcher optional beispielsweise wenigstens teilweise mit einem Gewinde versehen sein kann, so dass er mittels einer Mutter in einer entsprechenden Aussparung an einer Komponente einer Anlage, an der die Vorrichtung besfestigt werden soll, arretierbar ist. Zur elektrischen Trennung des Trägers 12 und des Generators ist ein dielektrisches Element (isolierendes Element) in Form einer Hülse 48, welche aus einem isolierenden Material gefertigt ist, und an welcher die Statoren 34, 36 des Generators befestigt sind, vorgesehen. Ferner ist zur Ausleitung der elektrischen Energie eine Aussparung 50 im Träger 12 angebracht, durch die die Leitungen, die zum Generator führen, in den Träger 12 geführt und innerhalb dieses dann zu einer Anschlußstelle geführt werden können.

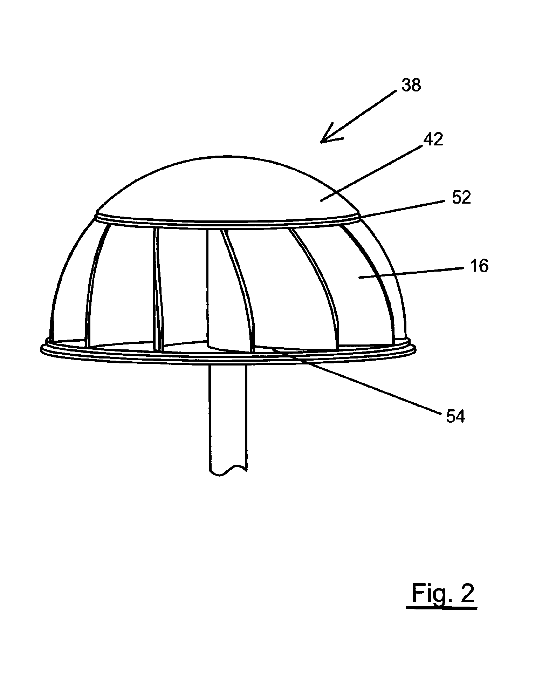

Wie aus Fig. 1 nicht ersichtlich ist, jedoch aus Fig. 2 entnommen werden kann, sind die beiden Seiten 26, 28 der Drehflügel 16, die die dem Wirkelementeträger 20 zugeordnete Seite 22 der Drehflügel 16 mit der dem Wirkelementeträger 20 abgewandten Seite 24 der Drehflügel 16 verbinden, mit einer ersten kreisförmigen Stützplatte 52 (Seite 26) und einer zweiten kreisförmigen Stützplatte 54 (Seite 28) verbunden, was der Vorrichtung 10 die nötige Stabilität verleiht. Diese Konstruktion findet auch in der ersten Ausführungsform gemäß Fig. 1 Anwendung, ist jedoch in Fig. 1 aus Übersichtlichkeitsgründen nicht dargestellt. Zur Stabilisierung des Laufs der oberen Stützplatte 52 ist an der den Drehflügeln 16 zugeordneten Seite der Einhausung 38 eine Stützvorrichtung in Form eines drehbar gelagerten Rades 56 angeordnet, das eine Deformierung der Drehflügel-Stützplatten-Einheit insbesondere bei höheren Drehgeschwindigkeiten verhindert. In der zweiten Ausführungsform ist weiterhin das Verbindungsbauteil 30 mit der Stützplatte 52 verbunden. Die Drehflügel 16 sind in dieser Ausführungsform mit dem Verbindungsbauteil, das die Wirkverbindung zwischen den Drehflügeln 16 und dem Rotor 32 des Generators herstellt, nicht selbst verbunden, sondern über die Stützplatte 52, an welcher auch die Drehflügel 16 befestigt sind.

In der ersten Ausführungsform gemäß Fig. 1 erstrecken sich die Drehflügel 16 von dem Wirkelementeträger 20 in radialer Richtung gerade (ungebogen) nach außen.

Die zweite Ausführungsform gemäß Fig. 2 entspricht der ersten Ausführungsform mit der Ausnahme, dass sich gemäß der zweiten Ausführungsform die Drehflügel 16 von dem Wirkelementeträger 20 in radialer Richtung gebogen nach außen erstrecken.

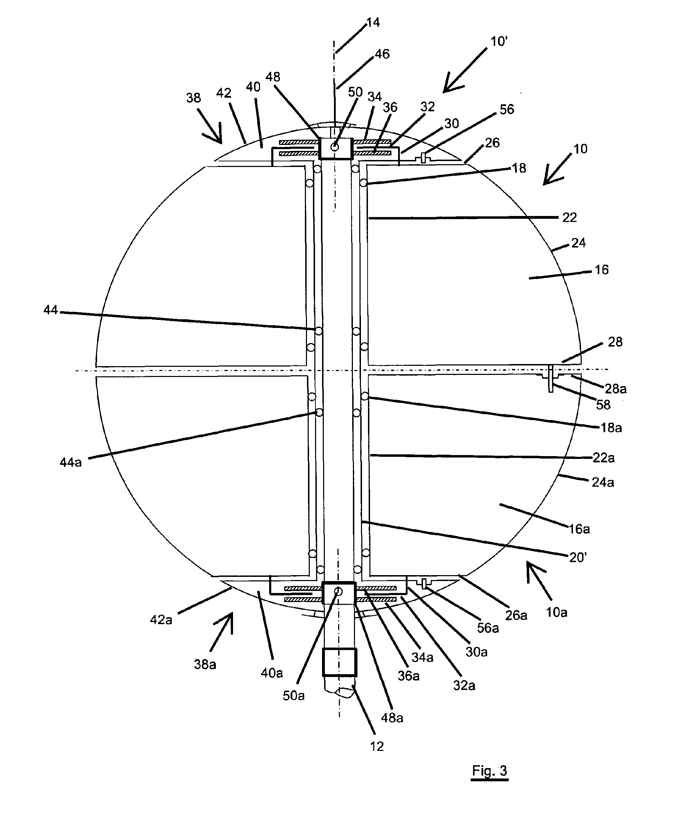

In Fig. 3 ist eine dritte mögliche Ausführungsform einer erfindungsgemäßen Vorrichtung 10' dargestellt, welche sich im Wesentlichen durch ein spiegelverkehrtes Aneinandersetzen zweier Vorrichtungen 10 und 10a gemäß der ersten Ausführungsform ergibt. Die Bezugszeichen, die dem zweiten, hinzugefügten Vorrichtungsteil 10a zuzuordnen sind, und Bauteile bzw. Komponenten betreffen, die bereits aus der ersten Ausführungsform bekannt sind und dieselbe Funktionalität aufweisen sind mit "a" indiziert. So sind beispielsweise die Wirkelemente der "zweiten Hälfte" 10a in Form der Drehflügel mit 16a bezeichnet, während der zweite Rotor mit 32a bezeichnet ist. Alle entsprechend indizierten Bauteile bzw. Komponenten sind gleich oder ähnlich zu denen der ersten Ausführungsform und besitzen dieselbe Funktionalität.

In der dritten Ausführungsform ist ferner an einem der Drehflügel 16a des zweiten Vorrichtungsteils 10a eine Mittelstützvorrichtung in Form eines drehbar gelagerten Rades 58 angeordnet, welche die Drehflügel-Stützplatten-Einheit des ersten Vorrichtungsteiles 10 und die Drehflügel-Stützplatten-Einheit des unteren Vorrichtungsteiles 10a voneinander beabstandet hält. Alternativ hierzu kann die Mittelstützvorrichtung auch an der entsprechenden zweiten Stützplatte (in Fig. 3 nicht dargestellt) des zweiten Vorrichtungsteiles 10a angeordnet sein. In einer möglichen Ausführungsform ist die Vorrichtung 10' derart ausgebildet, dass sich die Drehflügel 16 nur in einer ersten Drehrichtung drehen können und demzufolge auch nur in dieser Richtung antreibbar sind und die Drehflügel 16a sich nur in einer zweiten, der ersten Drehrichtung entgegengesetzten Drehrichtung drehen können und nur in dieser antreibbar sind. Dies sorgt dafür, dass ein Drehimpulsausgleich stattfindet und im Gegensatz zu einer Drehung der Drehflügel 16 und 16a in gleicher Richtung verringerte Kräfte (oder keine Kräfte, je nachdem, ob die Drehgeschwindigkeiten der Drehflügel 16 und 16a unterschiedlich oder gleich sind) auf den Träger 12 wirken. In einer anderen möglichen Ausführungsform werden sowohl die Drehflügel 16 als auch die Drehflügel 16a in derselben Richtung angetrieben.

Es sei an dieser Stelle angemerkt, dass gemäß der dritten Ausführungsform die beiden Vorrichtungsteile 10 und 10a nur einen Träger 12 aufweisen, der zu einer gemeinsamen Nutzung vorgesehen ist. Ferner ist in der dritten Ausführungsform der Wirkelementeträger 20' einstückig ausgebildet (zusammengesetzt aus zwei identischen Teilen, welche als Wirkelementeträger 20 der ersten Ausführungsform bekannt sind), wobei in einer alternativen Ausführungsform auch zwei Wirkelementeträger denkbar sind.

Die Ausbildung der beiden Vorrichtungsteile 10 und 10a kann in alternativen Ausführungsformen auch unterschiedlich sein. Beispielsweise können sich die Drehflügel 16 vom Wirkelementeträger 20' gerade nach außen erstrecken, während sich die Drehflügel 16a vom Wirkelementeträger 20' gebogen nach außen erstrecken. Auch weitere Merkmalskombinationen, die die Merkmale der obenstehend beschriebenen ersten und zweiten und der hierzu alternativen Ausführungsformen kombinieren, sind möglich.

In einer weiteren alternativen Ausführungsform weist die Vorrichtung 10' ein zwischen den ersten und den zweiten Wirkelementen, d.h. zwischen den ersten und den zweiten Drehflügeln 16, 16a ausgebildetes Volumen auf, in welchem Komponenten eines Elektromotors, insbesondere eines Elektromotors in Scheibenbauweise oder Komponenten zur Abgabe oder zur Übertragung der Drehbewegung angeordnet sind.

In den Figuren 4 und 5 ist eine vierte Ausführungsform einer erfindungsgemäßen Vorrichtung 10" dargestellt, welche im Wesentlichen auf der dritten Ausführungsform aufbaut. In der vierten Ausführungsform tritt eine Leithaube 60 hinzu, welche ein erstes Leitelement 62 und ein zweites Leitelement 64 aufweist. Die Leithaube 60 deckt Teilbereiche der Vorrichtung 10" ab, und sorgt somit für eine Strömungsführung, wie sie gewünscht ist.

Um die Leithaube 60 entsprechend fixieren zu können, weist diese eine erste Fixiervorrichtung 66, welche dem ersten Leitelement 62 zugeordnet und an diesem angebracht ist, und eine zweite Fixiervorrichtung 68, welche dem zweiten Leitelement 64 zugeordnet und an diesem angebracht ist, auf. Die Fixiervorrichtungen 66, 68 sind vorgesehen, um in entsprechende Aussparungen beispielsweise an einem Rohrabschnitt einzugreifen. Die Leitelemente 62, 64 schließen in der beschriebenen Ausführungsform einen Winkel von in etwa 135° ein, um einen Strömungseintritt und einen Strömungsaustritt wie er gewünscht ist, gewährleisten zu können. Es sind jedoch auch andere Ausführungsformen, die andere Winkelbereiche überdecken denkbar. Dies hängt jeweils von der gewünschten Verwendung ab.

Wie aus Fig. 5 erkennbar ist, weist die Außenumfangslinie der Leitelemente 62, 64 einen Abstand von der Außenumfangslinie der Drehflügel 16, 16a auf. Die Spaltbreite ist insbesondere ca. 5 bis 15mm, weiterhin insbesondere ca. 10mm, um Strömungsverwirbelungen zwischen den Drehflügeln und den Leitelementen 62, 64 bestmöglich zu unterbinden.

Die Leithaube 60 ist, wie durch Rechtecke 70, 72 und 74 angedeutet ist, mit dem Wirkelementeträger 20 (vgl. hierzu z.B.Fig. 1) starr verbunden. Dadurch, dass der Wirkelementeträger 20 drehbar gegen den Träger 12 gelagert ist und aufgrund der Tatsache, dass die Drehflügel 16, 16a drehbar an dem Wirkelementeträger 20 gelagert sind, kann die Leithaube 60 relativ zum Träger 12 bewegt bzw. gedreht werden bzw. kann sich der Träger 12 gegen die (zur Befestigung an einem Gehäuse vorgesehene) Leithaube 60 bewegen. Dies führt zu einer geringeren Materialbelastung durch eine Kompensation von Vibrationen und dgl. Es sei an dieser Stelle erwähnt, dass, wie bereits durch den obigen Verweis auf Fig. 1 angedeutet wurde, die Leithaube 60 selbstverständlich auch nur ein Abdeckelement aufweisen kann und somit für eine Verwendung in den Ausführungsformen gemäß den Figuren 1 und 2 sowie den in diesem Zusammenhang beschriebenen alternativen Ausführungsformen geeignet ist.

Alle beschriebenen Ausführungsformen können insbesondere derart ausgebildet sein, dass das Verhältnis der Radien der Stützplatten 52, 54 oder der Durchmesser der Stützplatten 52, 54 einen Wert von 0,3 bis 0,6, insbesondere einen Wert von 0,4 ergibt (kleinerer Radius geteilt durch den größeren Radius). Weiterhin können in allen beschriebenen Ausführungsformen die Drehflügel unterschiedliche radiale Erstreckungen aufweisen. Insbesondere ist eine alternierende Anordnung von Drehflügeln mit kurzer radialer Erstreckung und von solchen mit langer bzw. weiter radialer Erstreckung denkbar. Ferner können die Drehflügel aller Ausführungsformen in sich verkippt ausgebildet sein, d.h. derart, dass der Schnittpunkt der Seite 26 und der Seite 24 nicht in einer durch die restlichen drei Schnittpunkte der Drehflügelseiten aufgespannten Ebene liegt.

Weiterhin ist es denkbar, dass Strömungsleitvorrichtungen, welche einen anderen Aufbau als die Leithaube 60 haben, Verwendung finden. Dies können z.B. entsprechend gebogene Leitbleche, Rohrabschnitte, welche sich in Richtung der Anlage in ihrem Durchmesser verjüngen oder erweitern oder auch einen konstanten Durchmesser aufweisen oder auch in einem Zuström- oder Abström-Abschnitt angeordnete Leitelemente beliebiger Ausgestaltung sein.

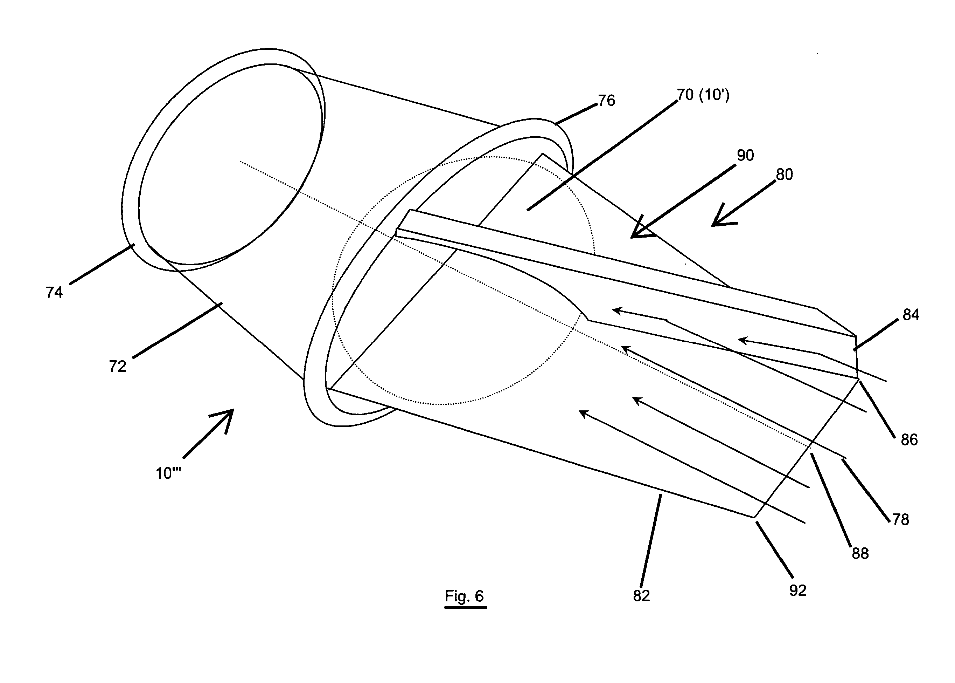

In diesem Zusammenhang sei auf Fig. 6 verwiesen, in der eine weitere (fünfte) mögliche Ausführungsform einer erfindungsgemäßen Vorrichtung 10" dargestellt ist. Die fünfte Ausführungsform weist eine Vorrichtung 10' gemäß der dritten Ausführungsform auf, deren Position durch einen Kreis 70 angedeutet ist. Ferner weist die Vorrichtung 10"einen ersten Rohrabschnitt 72, welcher mit Flanschen 74, 76 zum Befestigen an weiteren Rohrabschnitten (nicht dargestellt) versehen ist, auf. Die Vorrichtung weist ferner einen aus Übersichtlichkeitsgründen nicht dargestellten zweiten Rohrabschnitt auf, welcher identisch zum ersten Rohrabschnitt ist, und mit diesem verbunden ist. Der erste Rohrabschnitt 72 hat in dem Bereich, in dem die Vorrichtung 10' angeordnet ist, einen ersten Durchmesser, der größer ist als ein zweiter Durchmesser, welchen der Rohrabschnitt 27 in einem von der Vorrichtung 10' entfernten Bereich aufweist. Dies heisst in anderen Worten gesagt, dass die Vorrichtung 10' in einem Rohrsystem bestehend aus einem ersten Rohrabschnitt 72 und aus einem zweiten Rohrabschnitt (nicht dargestellt) angeordnet ist, wobei die lichte Weite der Rohrabschnitte zu der Vorrichtung 10' hin zunimmt.

In der Richtung, aus der die Strömung auf die Vorrichtung 10' auftrifft (die Strömungsrichtung ist durch Pfeile 78 verdeutlicht), ist im zweiten Rohrabschnitt eine Strömungsleitvorrichtung 80 vorgesehen, welche einen ersten Leitabschnitt 82, der in der Darstellung gemäß Fig. 6 waagrecht angeordnet ist, und einem zweiten, in der Darstellung gemäß Fig. 6 senkrecht angeordneten Leitabschnitt 84 aufweist, der (in der Fig. 6 nicht dargestellt) die Begrenzung eines vollfülligen Körpers, beispielsweise aus einem leichten Kunststoff oder dgl. gefertigt, zur Strömungsleitung darstellt, welcher ein durch den Leitabschnitt 84 und das entsprechende Rohr begrenztes Volumen einnimmt und vollständig ausfüllt, insbesondere um Strömungsverwirbelungen aufgrund einer Rückströmung des Mediums durch die Vorrichtung hindurch verhindern zu können. Weiterhin weist die Strömungsleitvorrichtung 80 einen weiteren in der Darstellung gemäß Fig. 6 senkrecht angeordneten, dritten Leitabschnitt (nicht dargestellt) auf, der an der Unterseite des ersten Leitabschnitts 82 angeordnet ist und analog zum zweiten Leitabschnitt die Begrenzung eines vollfülligen Körpers definiert, auf. Der zweite Leitabschnitt 84 ist auf dem ersten Leitabschnitt 82 derart angeordnet, dass er sich von einem Punkt 86 des Leitabschitts 82, welcher an einer der Vorrichtung 10' (wie vorstehend erwähnt angedeutet durch den Kreis 70) entfernten Seite des zweiten Rohrabschnitts mit demselben in Verbindung steht, zu der Mittelachse 88 des Leitabschnitts 82 auf einer der Vorrichtung 10' benachbarten Seite des Leitabschnitts 82 hin erstreckt.

Der obenstehend erwähnte dritte, nicht dargestellte Leitabschnitt ist entweder analog zum ersten oder zweiten Leitabschnitt 84 angeordnet, was dafür sorgt, dass die Vorrichtung 10' sowohl für die Drehflügel 16 als auch für die Drehflügel 16a (vgl. hierzu z.B. Fig. 3) dieselbe Drehrichtung annimmt oder er ist von der anderen Ecke 92 in Richtung der Mittelachse 88 erstreckt, was für gegenläufige Drehrichtungen sorgt. Der erste Leitabschnitt 82 dient insbesondere im Falle eines gegenläufigen Betriebs der ersten und der zweiten Drehflügel 16 und 16a dazu, Verwirbelungen aufgrund der gegenläufigen Bewegung der ersten und der zweiten Drehflügel 16 und 16a zu verhindern.

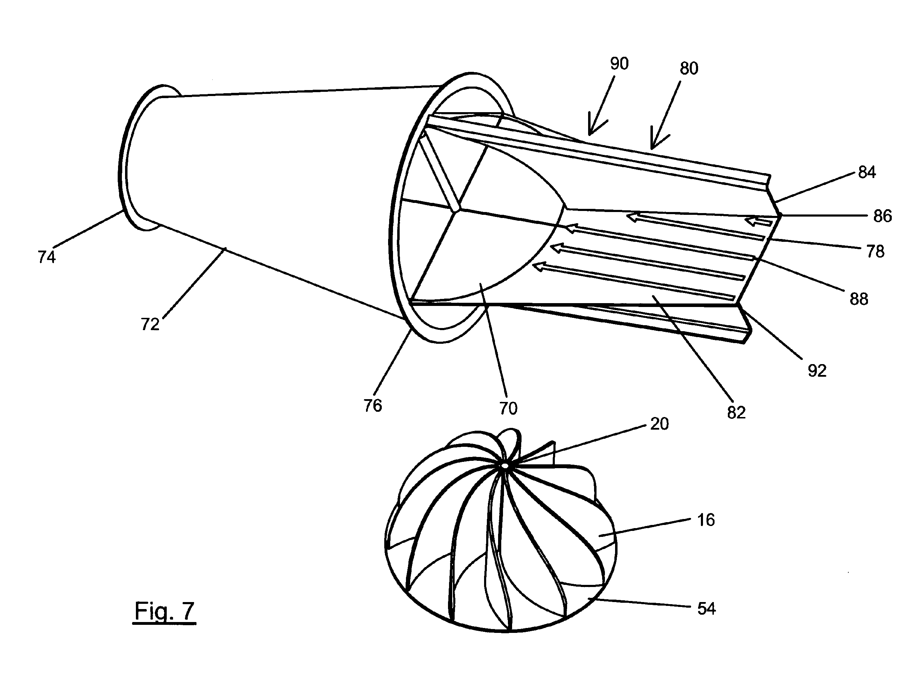

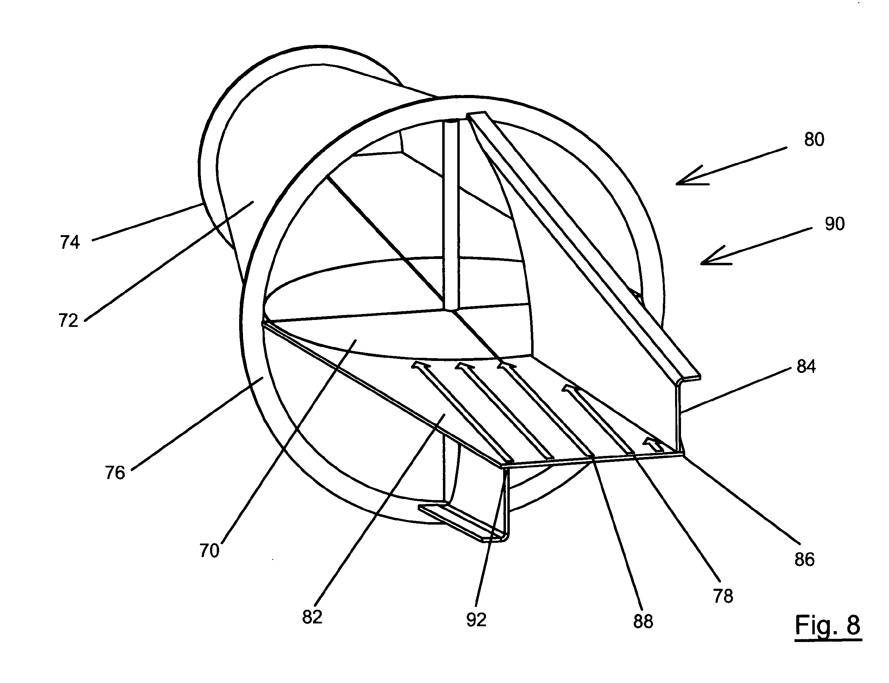

In den Figuren 7 und 8 ist eine weitere mögliche Ausführungsform einer erfindungsgemäßen Vorrichtung dargestellt. Diese ist der fünften, in Fig. 6 dargestellten Ausführungsform ähnlich und unterscheidet sich vor allem in folgenden Punkten von dieser: der erste Leitabschnitt erstreckt sich nicht nur in dem zweiten (nicht dargestellten) Rohrabschnitt, sondern auch in den ersten Rohrabschnitt 72 hinein, um auch beim Austritt des Mediums Verwirbelungen und unerwünschte Strömungseffekte verhindern zu können.

Ferner weist die Vorrichtung gemäß Fig.6 auch im Rohrabschnitt 72 einen zweiten Leitabschnitt auf, welcher wiederum einen vollfülligen Körper zusammen mit den entsprechenden Abschnitten des Rohrabschnitts 72 begrenzt. Auch dies dient dem möglichst unverwirbelten Ausströmen des Mediums.

Letztendlich ist aus Fig. 7 ersichtlich, dass die Drehflügel 16 in der sechsten Ausführungsform (dies ist im übrigen auch für alle anderen Ausführungsformen denkbar) in einer Draufsicht einen vollen Viertelkreis überdecken, d.h. nicht für eine entsprechende Einhausung ausgespart sind. Die Drehflügel 16 erstrecken sich in der dargestellten Ausführungsform gebogen vom Wirkelementeträger 20 weg, es ist jedoch auch eine gerade Erstreckung denkbar. Die Drehflügel weisen in der beschriebenen Ausführungsform demnach nur drei Seiten auf, von denen eine gebogen bzw. gekrümmt ausgebildet ist. Die gekrümmte Seite erstreckt sich dabei vom Wirkelementeträger bis zu der Stützplatte und definiert ein Wirkvolumen, welches wenigstens teilweise eine gebogene Oberfläche aufweist.

Anzumerken bleibt, dass sämtliche Komponenten, die einem Generator oder einer Vorrichtung zur Aufnahme oder Übertragung einer Drehbewegung für eine direkte mechanische Arbeit zuzuordnen sind, auch außerhalb der Vorrichtung 10, 10', 10", 10'" angeordnet sein können. Die Vorrichtung weist in diesem Falle nur eine mechanische (beispielsweise Zahnrad, welches mit einer entsprechenden Zahnstange zur Übertragung der Drehbewegung in Eingriff steht) oder auch eine magnetische (Magnetkupplung) Kopplung (ein Kopplungselement) auf, die/das für einen Übertrag der Drehbewegung nach außerhalb sorgt. Dies ist insbesondere bei Anwendungen mit giftigen Medien oder explosiven Medien vorteilhaft.

Es sei an dieser Stelle erwähnt, dass die Verwendung der obenstehend beschriebenen Vorrichtungen mannigfaltig und keineswegs auf Gase oder flüssige Medien beschränkt ist. Eine erfindungsgemäße Vorrichtung kann beispielsweise auch zur Energierückgewinnung im Bereich granularer Medien oder fester Körper entsprechender Ausgestaltung zum Einsatz kommen.

Es bleibt an dieser Stelle anzumerken, dass zwischen den Drehflügeln 16, 16a und dem Wirkelementeträger 20 ein sich insbesondere in axialer Richtung erstreckender Spalt angeordnet sein kann. Die Drehflügel 16, 16a erstrecken sich hierzu in radialer Richtung nicht bis zum Wirkelementeträger 20 bzw. bis zu den Befestigungsvorrichtungen, mit denen die Drehflügel 16, 16a am Wirkelementeträger 20 (drehbar um diesen) befestigt sind. Die Drehflügel 16, 16a sind in diesem Falle vorzugsweise mit geeigneten, beispielsweise strebenförmigen oder stabförmigen Befestigungselementen verbunden, welche sich in der radialen Richtung erstrecken und auf einer den Drehflügeln 16, 16a abgewandten Seite drehbar am Wirkelementeträger 20 angeordnet sind, so dass der Spalt (Axialspalt) zwischen den Drehflügeln 16, 16a und dem Wirkelementeträger 20 entsteht. Dieser Spalt dient der Ableitung eines entstehenden Staudrucks.

Ferner sei an dieser Stelle angemerkt, dass die erfindungsgemäße Vorrichtung in weiteren Ausführungsformen keinen Wirkelementeträger aufweisen muss. Sind die Drehflügel 16, 16a an den Stützplatten 52, 54 befestigt, so kann eine Befestigung an dem Wirkelementeträger 20, d.h. eine Befestigung im Bereich der Mittelachse 14 entfallen. Damit wird dann auch der Wirkelementeträger 20 nicht mehr benötigt. Je nach Konstruktion sind die Drehflügel 16, 16a dann um den Träger 12 angeordnet oder auch ggf., falls eine Konstruktion gewählt wird, in der der Träger 12 nicht oder nicht in der Mitte des Wirkvolumens benötigt wird, auch radial durchgehend über den gesamten Durchmesser der Stützplatten 52, 54 angeordnet, wobei die Drehflügel 16, 16a dann entsprechende Schlitze, insbesondere Axialschlitze, zum Abbau eines Staudrucks aufweisen können. Ferner ist auch in diesen Ausführungsformen denkbar, dass die Drehflügel 16, 16a insbesondere alternierend unterschiedliche radiale Erstreckungen nach aussen haben. Alternativ ist es denkbar, die Stützplatten 52, 54 nicht in die Konstruktion aufzunehmen, wenn die Drehflügel 16, 16a an dem Wirkelementeträger 20 befestigt sind.

Zusammenfassend lässt sich festhalten, dass bei der erfindungsgemäßen Vorrichtung Wirkelemente in Form von Drehflügeln 16, 16a um eine Drehachse drehbar angeordnet sind (in den beschriebenen Ausführungsformen ist die Drehachse die Mittelachse des Wirkelementeträgers 20, an welchem die Drehflügel 16, 16a drehbar angeordnet sind, bzw. die Mittelachse der Vorrichtung 10, 10'). Die Drehflügel 16, 16a erstrecken sich radial von der Drehachse weg, wobei sie sich gerade, gekrümmt und jeweils in sich verkippt oder nicht in sich verkippt von der Drehachse wegerstrecken können. Auf ihrer von der Drehachse abgewandten Seite weisen die Drehflügel 16, 16a einen gebogenen oder gekrümmten Außenumfang auf, wobei an dieser Stelle angemerkt sei, dass sich der gebogene oder gekrümmte , insbesondere kreisbogenförmige, kreisförmige oder ellipsoidbogenförmige Außenumfang auch bis zu der Drehachse hin erstrecken kann, so dass die Drehflügel mit der Drehachse einen Kreissektor oder einen Ellipsensektor oder eine andere durch einen gekrümmten Außenumfang definierte Fläche derart einschliessen, dass die Drehflügel 16, 16 a zwei in etwa gerade ausgebildete Seiten und eine gekrümmt ausgebildete Seite aufweisen. Durch die sich von der Drehachse wegerstreckende Anordnung definieren die Drehflügel 16, 16a ein Volumen, welches eine gebogene Oberfläche aufweist, beispielsweise eine Kugel oder ein ellipsenförmig begrenztes Volumen, welches als Wirkvolumen zur Verfügung steht und eine gute Energieausnutzung gewährleistet.

Zusammenfassend seien nochmals folgende Punkte erläutert:
Eine Vorrichtung zur Umwandlung von Strömungsenergie oder kinetischer Energie eines Fluids, eines granularen Mediums oder eines Festkörpers in kinetische Energie,
insbesondere Rotationsenergie, eines festen Körpers bzw. eine Vorrichtung zur Energierückgewinnung aus entsprechenden Medien weist Wirkelemente, insbesondere Drehflügel 16, 16a, 116 auf, welche dem strömenden Fluid oder dem granularen Medium oder dem mit kinetischer Energie beaufschlagten Festkörper ausgesetzt oder aussetzbar sind, und durch dieses oder diesen in Bewegung, insbesondere in eine Drehbewegung um eine Mittelachse der Vorrichtung bringbar angeordnet sind. Die Wirkelemente erstrecken sich in einer radialen Richtung von der Drehachse weg (in die radial nach aussen gerichtete Richtung) und definieren, beispielsweise durch Teile ihres Außenumfangs,
insbesondere durch ihre radial nach außen gerichteten Außenumfangsabschnitte, ein Volumen (das sogenannte Wirkvolumen), welches wenigstens teilweise kugelförmig als Kugelabschnitt oder halbkugelförmig als Halbkugelabschnitt ausgebildet ist. Der Rauminhalt des entsprechenden Kugelabschnitts oder Halbkugelabschnitts entspricht dabei vorzugsweise wenigstens 50%, insbesondere jedoch wenigstens 60%, weiterhin insbesondere wenigstens 70%, weiterhin insbesondere 80% oder 90% eines entsprechenden gesamten Kugel- oder Halbkugelvolumens. Alternativ sind andere Formen des Wirkvolumens denkbar, insbesondere durch Ellipsen aufgespannte Körper. Auch für diese gelten die oben genannten prozentualen Angaben. Allgemein lässt sich festhalten,
dass das Wirkvolumen vorzugsweise eine wenigstens über 50%, insbesondere jedoch wenigstens 60%, weiterhin insbesondere wenigstens 70%, weiterhin insbesondere 80% oder 90% gekrümmte Oberfläche aufweist. Die Wirkelemente können an Stützplatten bzw. Laufkreisscheiben angeordnet bzw. befestigt sein, welche mit einem Rotor eines Generators oder einem anderen Bauteil, das der Übertragung von Kräften bzw. von Leistung dient, verbunden sein.

Obwohl die Erfindung anhand von Ausführungsformen mit festen Merkmalskombinationen beschrieben wird, umfasst sie jedoch auch die denkbaren weiteren vorteilhaften Kombinationen, wie sie insbesondere, aber nicht erschöpfend, durch die Unteransprüche angegeben sind. Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Vorrichtung zur Energierückgewinnung aus einem strömenden Medium, insbesondere einem Fluid oder einem granularen Medium, oder einem mit kinetischer Energie beaufschlagten Festkörper,
**dadurch gekennzeichnet, dass**
die Vorrichtung zur Energierückgewinnung eine Vorrichtung (10, 10', 10") zur Umwandlung von Strömungsenergie oder kinetischer Energie eines Fluids, eines granularen Mediums oder eines Festkörpers in kinetische Energie, insbesondere Rotationsenergie, eines festen Körpers aufweist.

2. Vorrichtung (10, 10', 10") nach Anspruch 1
**dadurch gekennzeichnet, dass**
die Vorrichtung (10, 10', 10") zur Umwandlung von Strömungsenergie oder kinetischer Energie eines Fluids, eines granularen Mediums oder eines Festkörpers in kinetische Energie, insbesondere Rotationsenergie, eines festen Körpers Wirkelemente, insbesondere Drehflügel (16, 16a), welche dem strömenden Fluid oder dem granularen Medium oder dem mit kinetischer Energie beaufschlagten Festkörper ausgesetzt oder aussetzbar sind, und durch dieses oder diesen in Bewegung, insbesondere in eine Drehbewegung bringbar angeordnet sind, wobei die Wirkelemente wenigstens teilweise einen bogenförmig, insbesondere kreisförmig, kreisbogenförmig oder ellipsoidbogenförmig ausgebildeten Außenumfang aufweisen.

3. Vorrichtung (10, 10', 10") nach Anspruch 1,
**dadurch gekennzeichnet, dass**
die Wirkelemente mit einer Komponente eines elektrischen Generators, insbesondere einem Rotor (32, 32a) desselben oder einer Vorrichtung zur Aufnahme oder Übertragung einer Drehbewegung für eine direkte mechanische Arbeit, insbesondere einer Drehwelle oder einem Getriebe, verbunden sind.

4. Vorrichtung (10, 10', 10") nach einem der vorhergehenden Ansprüche ,
**dadurch gekennzeichnet, dass**
die Vorrichtung einen ersten zylindrisch ausgebildeten Wirkelementeträger (20) aufweist, an dem die Wirkelemente in einer ersten Drehrichtung insbesondere um dessen Mittelachse drehbar angeordnet sind, wobei sich die Wirkelemente radial von diesem wegerstrecken und durch ihren wenigstens teilweise gebogenen Außenumfang ein wenigstens teilweise durch eine gebogene Oberfläche definiertes Wirkvolumen definieren.

5. Vorrichtung (10, 10', 10") nach einem der vorhergehenden Ansprüche ,
**dadurch gekennzeichnet, dass**
die Vorrichtung einen zweiten Wirkelementeträger (20a) aufweist, an dem weitere, zweite Wirkelemente insbesondere in einer zweiten, der ersten Drehrichtung entgegengesetzten Drehrichtung drehbar angeordnet sind.

6. Vorrichtung (10, 10', 10") nach einem der Ansprüche 3 oder 4 ,
**dadurch gekennzeichnet, dass**
die jeweiligen Wirkelemente an einer dem jeweiligen Wirkelementträger (20, 20a) abgewandten Seite einen gebogenen, insbesondere kreisbogenförmigen oder ellipsoidal gebogenen Außenumfang aufweisen und ein mit einem gebogenen Außenumfang ausgebildetes Wirkvolumen definieren.

7. Vorrichtung (10, 10', 10") nach einem der vorhergehenden Ansprüche,
**dadurch gekennzeichnet, dass**
die jeweiligen Wirkelemente eine Seite (22) mit einem geraden Außenumfang aufweisen, welche einer Seite (24) mit gebogenem Außenumfang gegenüberliegt, und weiterhin zwei Verbindungsseiten (26, 28) aufweisen, die die Seite (22) mit dem geraden Außenumfang jeweils mit der Seite (24) mit dem gebogenen Außenumfang verbinden, wobei das Verhältnis der Seitenlängen der beiden Verbindungsseiten (26, 28) 0,3 bis 0,6, insbesondere 0,4 beträgt, wenn die Seitenlänge der kürzeren Verbindungsseite (26) durch die Seitenlänge der längeren Verbindungsseite (28) dividiert wird.

8. Vorrichtung (10, 10', 10") nach einem der Ansprüche 3 bis 6,
**dadurch gekennzeichnet, dass**
die Wirkelemente und/oder die zweiten Wirkelemente sich in einer radialen Richtung von dem jeweiligen Wirkelementeträger (20, 20a) gerade oder gebogen wegerstrecken.

9. Vorrichtung (10, 10', 10") nach einem der Ansprüche 3 bis 7,
**dadurch gekennzeichnet, dass**
die Wirkelemente und/oder die zweiten Wirkelemente verdreht bzw. in sich verkippt ausgebildet sind.

10. Vorrichtung (10, 10', 10") nach einem der vorhergehenden Ansprüche ,
**dadurch gekennzeichnet, dass**
die Vorrichtung weiterhin wenigstens ein, insbesondere zwei durch eine abnehmbare Einhausung (38) begrenztes Volumen/Volumina (40, 40a) aufweist, in welchem/welchen Komponenten eines Generators, insbesondere Scheibengenerators oder Komponenten zur Aufnahme oder zur Übertragung der Bewegung, insbesondere Drehbewegung angeordnet sind, wobei die Einhausung (38) einen Abschnitt (42) mit einem bogenförmigen Außenumfang aufweist, welcher mit den Wirkelementen eine ununterbrochene Außenumfangslinie bildet.

11. Vorrichtung (10, 10', 10") nach einem der Ansprüche 4 bis 9,
**dadurch gekennzeichnet, dass**
die Vorrichtung ein zwischen den ersten und den zweiten Wirkelementen ausgebildetes Volumen aufweist, in welchem Komponenten eines Generators, insbesondere Scheibengenerators oder Komponenten zur Aufnahme oder zur Übertragung der Bewegung, insbesondere Drehbewegung angeordnet sind.
